# EUROPÄISCHE PATENTSCHRIFT

(11) **EP 1 212 552 B1**
(45) Veröffentlichungstag und Bekanntmachung des Hinweises auf die Patenterteilung: **04.06.2003**
(21) Anmeldenummer: 00960621.1
(22) Anmeldetag: 07.09.2000
(51) Int. Cl.: F16H 57/02, F16H 1/14, B60K 17/22

(54) **EINHEITSGEHÄUSE FÜR EINEN WINKELTRIEB**
UNITARY CASE FOR AN ANGULAR DRIVE
CARTER UNITAIRE POUR UN RENVOI ANGULAIRE

(30) Priorität: 14.09.1999 DE 29916006 U
(43) Veröffentlichungstag der Anmeldung: 12.06.2002
(73) Patentinhaber: Voith Turbo GmbH & Co. KG, 89522 Heidenheim (DE)
(72) Erfinder: KÖRNER, Tillmann, 89551 Zang (DE); SCHIEDER, Achim, Paul, 92703 Krummennaab (DE); WALTER, Peter, 77770 Durbach (DE)
(74) Vertreter: Dr. Weitzel & Partner
(86) Internationale Anmeldenummer: EP0008755
(87) Internationale Veröffentlichungsnummer: WO01020196

(56) Entgegenhaltungen:
- DE-U- 9 102 998
- GB-A- 2 000 734
- US-A- 3 350 958
- US-A- 4 282 765
- US-A- 4 553 624
- PATENT ABSTRACTS OF JAPAN vol. 014, no. 155 (M-0954), 26. März 1990 (1990-03-26) -& JP 02 017244 A (KOYO SEIKO CO LTD), 22. Januar 1990 (1990-01-22)
- PATENT ABSTRACTS OF JAPAN vol. 1997, no. 12, 25. Dezember 1997 (1997-12-25) -& JP 09 210144 A (MITSUBISHI HEAVY IND LTD), 12. August 1997 (1997-08-12)

## Beschreibung

Die Erfindung betrifft ein Einheitsgehäuse für einen Winkeltrieb einer Getriebebaueinheit, im einzelnen mit den Merkmalen aus dem Oberbegriff des Anspruchs 1, ferner eine Gehäuse für eine Getriebebaueinheit und eine Getriebebaueinheit.

Getriebebaueinheiten sind in einer Vielzahl von unterschiedlichsten Ausführungen bekannt. Diese unterscheiden sich beispielsweise hinsichtlich der Art der realisierten Drehzahl-/Drehmomentenwandlung. Diese kann beispielsweise rein mechanisch oder kombiniert mit anderen Wandlungsmöglichkeiten ausgeführt werden. Insbesondere bei Getriebebaueinheiten mit rein mechanischer Leistungsübertragung oder kombinierter mechanischer und anderer Leistungsübertragung steht zunehmend das Erfordernis der Universalität der Getriebebaueinheit im Vordergrund. Zur Realisierung eines Abtriebes in einem bestimmten Winkel zur Getriebeeingangswelle werden bei derartigen Getriebebaueinheiten Winkeltriebe verwendet, die mit einer Grundgetriebebaueinheit kombiniert werden. Diese ermöglichen die Realisierung eines bestimmten Winkels zwischen der Getriebeeingangswelle und der Getriebeausgangswelle. Für unterschiedliche Anforderungen, d.h. unterschiedliche Abtriebswinkel, unterschiedlich zu übertragende Antriebsmomente sowie Neigungswinkel zur Fahrbahn muß dabei jeweils ein separates, dafür ausgelegtes Getriebegehäuse bzw. ein bestimmter Einheitsgehäuse vorgesehen werden, welcher den Winkeltrieb in entsprechender Weise umschließt. Die Vielzahl möglicher Gehäusevarianten und der geringe Grad der Standardisierung äußert sich dabei in einem erhöhten Fertigungsaufwand und hohen Kosten.

Aus der gattungsgemäβen Druckschrift DE 91 02 998 U1 ist ein Bewegungsmechanismus zur Übertragung von Drehbewegungen in beliebige Richtungen vorbekannt, welcher Achswinkel unterschiedlicher Größe realisieren kann. Das Gehäuse weist dabei einen zylindrischen Aufbau auf. Für jeden neuen Achswinkel sind entsprechende Lageraufnahmeelemente und Durchgangsöffnunge im Gehäuse vorzusehen. Ein wesentlicher Nachteil dieser Ausführung besteht jedoch darin, daß diese aufgrund des zylindrischen Aufbaus in axialer Richtung zu einer erheblichen Verlängerung bei Integration bzw. Kopplung mit einer Grundgetriebebaueinheit führt. Des weiteren sind für unterschiedliche Winkel jeweils unterschiedliche Durchgangsöffnungen erforderlich.

Des Erfindung liegt daher die Aufgabe Zugrunde, ein gehäuse für eine Mehrzahl von Winkeltrieben für den Einsate in Getriebebaueinheiten mit mechanischer oder kombinierter Leistungsübertragung derart weiter zu entwickeln, daß die Gesamtgetriebebaueinheit für unterschiedliche Abtriebsvarianten mit einem standardisierten Gehäuse bei minimaler Baulänge der Gesamtgetriebebaueinheit ausstattbar ist. Desweiteren soll die Gesamtgetriebebaueinheit aus einer Getriebegiwdbaueinheit durch einfache Modifikation für unterschiedlichste Einsatzerfordemisse entwickelbar sein. Insbesondere ist auf die Möglichkeit der Schaffung eines Einheitsgehäuses für die Realisierung unterschiedlichster Winkeltriebe abzustellen. Die erfindungsgemäße Lösung soll sich des weiteren durch einen geringen konstruktiven Aufwand auszeichnen.

Die erfindungsgemäße Lösung ist durch die Merkmale der Ansprüche 1, 10 und 12 charakterisiert. Vorteilhafte Ausgestaltungen sind in den Unteransprüchen wiedergegeben.

Erfindungsgemäß weist ein Einheitsgehäuse für eine Mehrzahl von Winkeltrieben, umfassend wenigstens eine Kegelradstufe mit einem ersten Kegelrad und einem zweiten Kegelrad, zur Realisierung unterschiedlicher Winkel zwischen einer Getriebeeingangs- und einer Getriebeausgangswelle, wobei das zweite Kegelrad mit der Getriebeausgangswelle wenigstens mittelbar drehfest koppelbar ist, für eine Mehrzahl der theoretisch möglichen wnkelabtriebe mit nahezu konstanter Übersetzung i und konstantem Außendurchmesser der einzelnen Kegelräder identische Außenabmessungen auf. Der Getriebeausgangsweile und/oder dem zweiten Kegelrad sind im Einheitsgehäuse Lagerungsaufnahmeeinrichtungen zugeordnet. Diese werden von der Innenkontur des Einheitsgehäuses und/oder austauschbaren, zur Aufnahme der Lagerungen der Getriebeausgangswelle dimensionierten Lagertragelementen gebildet.

Die Mehrzahl der theoretisch möglichen im Einheitsgehäuse lagerbaren Winkeltriebe ist dabei durch zwei Grenzpositionen der Schnittpunkte der Flankenlinien der Kegelräder beschreibbar. Eine erste Grenzposition für den Winkeltrieb mit dem größten theoretisch möglichen oder gewünschten Winkel zwischen Getriebeeingangs- und Getriebeausgangswelle wird dabei durch den am nächsten am Gehäuse liegenden Schnittpunkt und eine zweite Grenzposition für den Winkeltrieb mit dem kleinsten theoretisch möglichen Winkel zwischen Getriebeeingangs- und Getriebeausgangswefle durch den am weitesten vom Gehäuse entfernten Schnittpunkt der Flankenlinien charakterisiert. Vorzugsweise beschreiben die Grenzositionen einen Winkeltriebbereich zwischen 90 und <180°

Die einzelnen Winkeltriebe unterscheiden sich somit lediglich hinsichtlich des im Einbauzustand beschriebenen Winkels zwischen der Getriebeeingangswelle und der Getriebeausgangswelle, welcher gleichzeitig dem Winkel zwischen den Symmetrielinien der einzelnen Kegelräder und damit dem Eingang und Ausgang des Winkeltriebes entspricht. Die erfindungsgemäße Lösung ermöglicht es, mit einem einzigen Gehäuse unterschiedliche Winkelabtriebe zu umschließen; lediglich die Fertigung, insbesondere die Einarbeitung der Innenkontur durch Fräsen, Bohren oder ähnliches lebzw. die Ausführung der Lageraufnahmeeinrichtungen legt den Abtriebswinkel fest. Der Kunde ist somit hinsichtlich der Abmessungen der Getriebebaueinheit nicht von unterschiedlichen Winkelabtrieben abhängig, sondern es besteht die Möglichkeit, ein Einheitsgehäuse für eine Getriebebaueinnheit aus einer Getriebegrundbaueinheit mit unterschiedlichsten Winkelabtrieben anzubieten.

Die Erzeugung der Innenkontur für jeden theoretisch möglichen Winkel zwischen Getriebeeingangswelle und Getriebeausgangswelle kann durch eine entsprechende spanende Bearbeitung der Gehäuseinnenwand erfolgen. Bei Verwendung einer entsprechenden Lageraufnahmeeinrichtung weist diese vorzugsweise zwei Lagertragelemente, die der Getriebeausgangswelle zugeordnet sind, zur Aufnahme wenigstens jeweils eines Lagers auf - ein erstes Lagertragelement und ein zweites Lagertragelement - . Die Lagertragelemente bilden jeweils eine Lauffläche der einzelnen Lager. Das erste Lagertragelement dient dabei der Lagerung des Endbereiches der Getriebeausgangswelle im Gehäuse, während das zweite Lagertragelement der Lagerung der Getriebeausgangswelle im Bereich des Austritts aus dem Gehäuse dient.

In einer besonders vorteilhaften Ausführungsform mit minimierter Bauteilanzahl bildet wenigstens eines der Lagertragelemente - erstes und/oder zweites Lagertragelement einen Teil der Außenwand des Gehäuses, vorzugsweise sind beide Lagertragelemente Bestandteil des Gehäuses.

In einer Weiterentwicklung weist das zweite Lagertragelement bereits Anschlüsse und/oder Durchführungen für Betriebsmittelleitungen und/oder Durchführungen für elektrische Leitungen auf, so daß diese für einen bestimmten Winkeltrieb unabhängig vom restlichen Gehäuse zusätzlich modifizierbar sind.

Eine weitere Standardisierung wird durch die Anordnung eines zweiten Wärmetauschers am zweiten Tragelement erzielt.

Die Befestigung der Lagertragelemente an der Gehäuseinnenwand kann auf unterschiedliche Art und Weise realisiert werden, beispielsweise mittels Befestigungselementen. Die Lagertragelemenete weisen dabei vorzugsweise einheitliche Außenabmessungen auf, insbesondere in den Flächenbereichen, welche die Innenwand des Gehäuses berühren, bzw. mit Ausnehmungen oder Vorsprüngen an der Innenwand des Gehäuses zusammenwirken. Dies bietet den Vorteil, daß das Einheitsgehäuse ohne Lagertragelemente ebenfalls einheitlich für alle theoretisch möglichen Winkeltriebe ausgestaltet ist, und nur die eigentlichen Abstützflächen der Lager an den Lagertragelementen unterschiedlich ausgebildet werden müssen.

Das Gehäuse für eine Getriebebaueinheit, umfassend eine Grundgetriebeeinheit und einen Winkeltrieb mit einem der Grundgetriebebaueinheit zugeordneten Grundgetriebegehäuse wird mit einem, dem Winkeltrieb zugeordneten Einheitsgehäuse nach einem der Ansprüche 1 bis 9 ausgestattet.

Sind in einer besonderen Ausführungsform der Grundgetriebebaueinheit im Grundgetriebegehäuse eine Mehrzahl von Kanälen zur Betriebs-und/oder Schmiermittel- und/oder Kühlmittelführung angeordnet, so sind den Kanälen zur Betriebs-und/oder Schmiermittel- und/oder Kühlmittelführung entsprechend komplementäre Anschlußkanäle im Einheitsgehäuse zugeordnet, weiche beim Zusammenschluß von Getriebegrundgehäuse und Einheitsgehäuse durch die Getriebebaueinheit erstreckende Kanäle zur Betriebs-und/oder Schmiermittel- und/oder Kühlmittelführung bilden.

Die Getriebebaueinheit kann als rein mechanische Getriebebaueinheit ausgeführt sein, dies bedeutet, daß die Drehzahl-/Drehmomentenwandlung allein über mechanische Übertragungselemente erfolgt. Denkbar ist jedoch auch die Ausführung einer Getriebebaueinheit mit kombinierter Leistungsübertragung. Beispielsweise denkbar ist die Ausführung als
a) mechanisch-hydrodynamisches Verbundgetriebe
b) mechanisch-hydrostatisches Verbundgetriebe
c) mechanisch-elektrisches Verbundgetriebe.

Diese umfaßt ein zwischen Getriebeeingangswelle und Getriebeausgangswelle angeordnetes Grundgetriebe und einen Winkeltrieb, weicher mit dem Abtrieb des Grundgetriebes wenigstens mittelbar drehfest verbunden ist. Der Winkeltrieb umfaßt wenigstens eine Kegelradstufe mit einem ersten Kegelrad und einem zweiten Kegelrad, wobei das zweite Kegelrad mit der Getriebeausgangswelle wenigstens mittelbar drehfest koppelbar ist.

Die Anbindung des ersten Kegelrades an den mechanischen Getriebeteil kann unterschiedlich erfolgen. Denkbar sind folgende Möglichkeiten:
a) Kopplung mit einer Abtriebswelle des mechanischen Getriebeteils
b) Kopplung mit einem Getriebeelement des mechanischen Getriebeteils

Die drehfeste Kopplung kann kraft- und/oder formschlüssig erfolgen. Vorzugsweise wird eine Ausführung verwendet, bei der der mechanische Getriebeteil eine Planetenradstufe umfaßt und die drehfeste Kopplung des ersten Kegelrades mit dem Hohlrad als Getriebeelement realisiert wird. Die Kopplung kann auch hier durch Kraft- und/oder Formschluß und/oder Stoffschluß erfolgen. Vorzugsweise werden jedoch das erste Kegelrad und das Getriebeelement der Planetenradstufe als integrale Baueinheit ausgeführt.

Das erste Kegelrad des Winkeltriebes und ein den Abtrieb der Grundgetriebebaueinheit bildendes Getriebeelement der Grundgetriebebaueinheit sind vorzugsweise unmittelbar miteinander drehfest verbunden und räumlich nahe beieinander angeordnet.
Umfaßt die Grundgetriebebaueinheit wenigstens einen Planetenradsatz mit wenigstens einem Hohlrad, einem Sonnenrad, Planetenrädern und einem Steg oder einen Stirnradsatz wird der Abtrieb der Grundgetriebebaueinheit wird von einem Element des Planetenradsatzes oder des Stimradsatzes gebildet. In einer besonders bevorzugten Ausführungsform ist das erste Kegelrad der Kegelradstufe drehfest mit dem Hohlrad der Planetenradstufe koppelbar.

Bei drehfester Kopplung des ersten Kegelrades mit einem Hohlrad des mechanischen Getriebeteiles und der beschriebenen Gehäuseform kann mit besonders großen Durchmessern am ersten Kegelrad operiert werden. Dies führt zu einer besonders kurzen und kompakten Bauweise. Der Ein- und Ausbau des zweiten, mit der Abtriebswelle gekoppelten Kegelrades, erfolgt vorzugsweise über die Ebene der Anflanschung des gesamten Winkeltriebes. Die Lagerung der Winkeltriebelemente selbst ist unabhängig von der Einheitslagerung des Abtriebes, d.h. der Getriebeausgangswelle, weshalb auf ein Nachstellen der Lager bei der Winkeltriebanflanschung verzichtet werden kann. Die ansonsten am Deckel des Grundgetriebes ohne Winkeltrieb angeflanschten Kühleinrichtungen können am Endbereich des Winkeltriebes angesetzt werden Die erforderlichen Verbindungsleitungen müssen dann nicht mehr über Schlauchleitungen hergestellt werden, sondern können als Kanäle ins Gehäuse eingreifen.

Die einzelnen Elemente der Kegelradstufe können mit Geradverzahnung oder Schrägverzahnung ausgeführt werden. Vorzugsweise werden Verzahnungen verwendet, bei welchen das einzelne Verzahnungselement eine konstante Zahnhöhe aufweist. Bei Ausbildung als Schrägverzahnung wird vorzugsweise eine Evolventen-Verzahnung verwendet. Die Schrägverzahnung ermöglicht eine besonders geräuscharme Betriebsweise.

Die erfindungsgemäße Lösung ermöglicht es, mit nur einem Winkeltriebgehäuse alle Winkel und Abtriebsmomente abzudecken. Durch die durchmesserbetonte Bauweise wird der Winkeltrieb sehr kompakt und kurz. Die Wartung gestaltet sich sehr einfach, ebenso der Ein- und Ausbau der Lager- und Zahnräder.

Die erfindungsgemäße Lösung wird nachfolgend anhand von Figuren erläutert. Darin ist im einzelnen folgendes dargestellt;
- Figur 1: verdeutlicht in schematisch vereinfachter Darstellung eine Ansicht in axialer Richtung auf eine erfindungsgemäß gestaltete Getriebebaueinheit;
- Figur 2: zeigt in schematisch vereinfachter Darstellung die Lagerung der Getriebeausgangswelle A für zwei unterschiedliche Winkel zwischen der Getriebeeingangswelle und der Getriebeausgangswelle;
- Figur 3: zeigt in vereinfachter Darstellung entsprechend einer Ansicht A auf die Figuren 1 oder 2 die Möglichkeit des Anbaus des Winkeltriebes;
- Figuren 4.1 bis 4.4: verdeutlichen Möglichkeiten des Einsatzes der erfindungsgemäßen Getriebebaueinheit in Busantrieben mit unterschiedlichen Anforderungen;
- Figur 5: verdeutlicht eine Weiterentwicklung des Einheitsgehäuses.

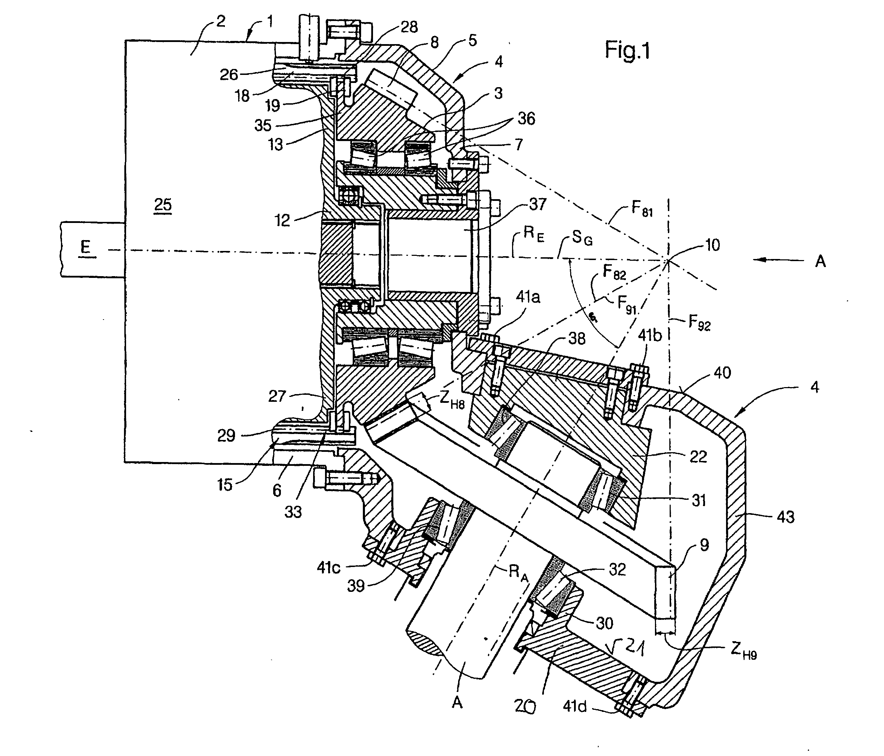

Die Fig. 1 verdeutlicht in schematisch vereinfachter Darstellung anhand eines Ausschnittes aus einem Axialschnitt einer Getriebebaueinheit 1 die erfindungsgemäß gestaltete Anbindung eines Winkeltriebes 4 an die Grundgetriebebaueinheit 25. Die Getriebebaueinheit weist eine Getriebeeingangswelle E und wenigstens eine, als Abtrieb fungierende Getriebeausgangswelle A auf. Getriebeeingangswelle E und Getriebeausgangswelle A sind derart angeordnet, daß deren theoretische Rotationsachsen R_{E} und R_{A} in einem Winkel zueinander verlaufen. Die Getriebebaueinheit 1 umfaßt wenigstens eine Grundgetriebebaueinheit 25, welche zwischen der Getriebeeingangswelle E und der Getriebeausgangswelle A angeordnet ist. Die Grundgetriebebaueinheit 25 umfaßt einen mechanischen Getriebeteil 2, und eine als Winkeltrieb 4 ausgebildete Kegelradstufe 3, welche mit der Getriebeausgangswelle A gekoppelt ist. Die Getriebebaueinheit 1 weist des weiteren ein Getriebegehäuse 5 auf, welches wenigstens zweiteilig ausgeführt ist. Im vorliegenden Fall umfaßt dieses wenigstens ein Getriebegrundgehäuse 6 und einen Einheitsgehäuse 7, welcher den Winkeltrieb 4 wenigstens teilweise umschließt und mit dem Getriebegehäuse 6 verbindbar ist. Der Einheitsgehäuse 7 kann jedoch ebenfalls mehrteilig ausgeführt sein.

Der Winkeltrieb 4, welcher von einer Kegelradstufe 3 gebildet wird, weist wenigstens zwei miteinander kämmende Kegelräder - ein erstes Kegelrad 8 und ein zweites Kegelrad 9 - auf. Das erste Kegelrad 8 ist dabei koaxial zur Getriebeeingangswelle E angeordnet. Das zweite Kegelrad 9, welches mit der Getriebeausgangswelle A drehfest koppelbar ist, ist in einem bestimmten Winkel zum ersten Kegelrad 8 angeordnet.

Die theoretischen Rotationsachsen der einzelnen Kegelräder bzw. deren Symmetrieachsen, welche den theoretischen Rotationsachsen von Getriebeeingangs- und Getriebeausgangswelle R_{E} und R_{A} entsprechen, schneiden sich dabei in einem Punkt 10, welcher auf der Symmetrieachse der Getriebebaueinheit 1 liegt. in diesem Punkt schneiden sich auch die Flankenlinien F an die Verzahnung der einzelnen Kegelräder bei Projezierung in eine gemeinsame Ebene E mit der Getriebesymmetrieachse S_{G}. Die Flankenlinien sind hier mit F₈₁, F₈₂ und F₉₁, F₉₂ bezeichnet. Die Verzahnung der einzelnen Kegelräder ist vorzugsweise als Geradverzahnung ausgeführt. Denkbar sind jedoch auch Ausführungen mit Schrägverzahnung oder bogenförmig ausgebildeter Verzahnung, deren Flankenlinien bogenförmig verlaufen. Bei Kegelrädern mit bogenförmigen Flankenlinien können diese als Kreisbogen, Evolvente oder Epizykloide ausgeführt sein. im dargestellten Fall sind die Kegelräder 8 und 9 mit einer konstanten Zahnhöhe Z_{H8} und Z_{H9} versehen. Die nachfolgenden Ausführungen beziehen sich auf die in der Fig. 1 konkret beschriebene Geradverzahnung. In Analogie können diese Ausführungen auch auf andere Verzahnungen angewandt werden.

Für eine bestimmte Getriebegrundbaueinheit 25 werden zur Realisierung unterschiedlicher Winkel zwischen der getriebeeingangswelle E und der Getriebeausgangswelle A Winkeltriebe 4 vorgesehen, welche derart ausgelegt sind, daß die einzelnen Flankenlinien bei Geradverzahnung oder die in eine Ebene mit der Getriebeachse S_{G} projezierten Flankenlinien unterschiedliche Winkel mit der Getriebeachse S_{G} bilden können. Die einzelnen theoretisch für ein Gehäuseteil 7 geeigneten Winkeltriebe 4 zur Realisierung unterschiedlicher Winkel zwischen der Getriebeeingangswelle E und der Getriebeausgangswelle A, die sich zum einen durch eine im wesentlichen konstante Übersetzung zwischen den einzelnen Kegelrädern 8 bzw. 9 auszeichnen sowie im wesentlichen konstante Außendurchmesser der einzelnen Kegelräder 8 bzw. 9 aufweisen, überstreichen hinsichtlich der Schnittpunkte ihrer Flankenlinien F₈₁, F₈₂, F₉₁, F₉₂ mit der Getriebeachse S_{G} einen bestimmten Bereich in axialer Richtung auf der Getriebeachse S_{G}. Entsprechend dieses Bereiches findet auch die Auslegung des Getriebegehäuses 5 bzw. des den Winkeltrieb umschließenden Gehäuseteils 7 statt. Um vorzugsweise ein möglichst einheitliches Gehäuse 5, eingeschlossen den Einheitsgehäuse 7, für eine Grundgetriebebaueinheit 1 mit unterschiedlichen Abtriebsgegebenheiten, d.h. unterschiedlichem Winkel der Getriebeausgangswelle A gegenüber der Getriebeeingangswelle E zu realisieren, wird der zweite Einheitsgehäuse 7 derart standardisiert ausgeführt, daß dieser zur Aufnahme aller theoretisch möglichen bzw. gewünschten Winkeltriebe 4 geeignet ist, wobei als Unterscheidungskriterium lediglich der Winkel zwischen Getriebeeingangswelle E und Getriebeausgangswelle A fungiert, während das Übersetzungsverhältnis und die Außendurchmesser der Kegelräder für die einzelnen theoretisch möglichen Winkel konstant gehalten werden. Das Grundgehäuse des Einheitsgehäuses 7 wird daher für die beiden theoretischen Grenzfälle ausgelegt, daß der Schnittpunkt 10 der Flankeniinien der Kegelräder 8 bzw. 9 der Kegelradstufe 3 in axialer Richtung am nächsten am Getriebegehäuse 5 bzw. am Einheitsgehäuse 7 und amweitesten weg liegt. Der erste Grenzfall kann beispielsweise der Situation eines Winkeltriebes 4 von 90° entsprechen oder aber sogar einem Winkel größer 90°. Eine genaue Festlegung ist nicht erforderlich, sollte jedoch im theoretisch möglichen Rahmen liegen, wobei auch die konstruktive Ausführbarkeit mit zu berücksichtigen ist. Vorzugsweise wird jedoch ein Winkeltrieb mit einem Winkel zwischen Getriebeeingangswelle E und Getriebeausgangswelle A im Bereich von 90° bis < 180, wobei der Winkel <180° den zweiten Grenzfall bildet, angestrebt. Wie bereits ausgeführt, bleibt die Außenkontur für unterschiedliche Winkeltriebe 4 mit im wesentlichen identischer Übersetzung i und gleichem Außendurchmesser d_{A} der einzelnen Kegelräder 8 bzw. 9 konstant, während die Anpassung an unterschiedliche Winkeltriebe, insbesondere die Anordnung der Lagerungen durch Gestaltung oder Bearbeitung der Innenkontur des Gehäuses, insbesondere des Einheitsgehäuses 7, erfolgt.

Die erfindunggemäße Ausführung des Einheitsgehäuses für eine Mehrzahl der theoretisch möglichen Winkelabtriebe mit nahezu konstanter Übersetzung i und konstantem Außendurchmesser der einzelnen Kegelräder 8 und 9 für unterschiedliche Winkeltriebe mit identischen Außenabmessungen umfaßt Lagerungsaufnahmeeinrichtungen 20, die der Getriebeausgangswelle A und/oder dem zweiten Kegelrad 9 im Einheitsgehäuse 7 zugeordnet sind. Die Lagerungsaufnahmeeinrichtungen 20 werden von der Innenkontur 21 des Einheitsgehäuses und/oder austauschbaren, zur Aufnahme der Lagerungen der Getriebeausgangswelle dimensionierten Lagertragelementen gebildet. Im dargestellten Fall entsprechend der zweiten Alternative von Lagertragelementen 22 und 30, die der Getriebeausgangswelle zugeordnet sind. Diese dienen der Aufnahme wenigstens jeweils eines Lagers 31 und 32. Die Lagertragelemente 22 und 30 bilden jeweils eine Lauffläche 38 und 39 der einzelnen Lager 31 bzw. 32. Dabei dient das erste Lagertragelement 22 der Lagerung des Endbereiches der Getriebeausgangswelle A im Gehäuse 7. Das zweite Lagertragelement 30 dient der Lagerung der Getriebeausgangswelle A im Bereich des Austritts aus dem Gehäuse 7. Beide Lagertragelemente 22, 30- erstes und/oder zweites Lagertragelement - bilden einen Teil der Außenwand 40 des Gehäuses 7. Die Tragelemente 22 und 30 sind mittels Befestigungselementen 41 a, 41 b, 42a, 42b an der Gehäusewand 43 befestigbar sind.

Die enge Koppelung des ersten Kegelrades 8 mit den Elementen des mechanischen Getriebeteils 2 kann auf unterschiedliche Art und Weise erfolgen. In der dargestellten bevorzugten Ausführung wurde eine Anbindung gewählt, welche sich durch eine besonders kompakte Bauform für die Gesamtgetriebebaueinheit 1 auszeichnet, da das erste Kegelrad 8 mit einem sehr großen Kegelraddurchmesser ausgeführt werden kann. Die Anbindung erfolgt hierbei an ein Getriebeelement eines Planetenradsatzes 27 der Getriebegrundeinheit 25, welches gleichzeitig den Abtrieb 15 für die Getriebegrundeinheit 25 und damit den Eingang für den Winkeltrieb 4 bildet. Der Planetenradsatz umfaßt dabei ein Sonnenrad 12, ein Hohlrad 26, Planetenräder 13 und einen Steg. Das den Abtrieb 15 bildende Getriebeelement wird vom Hohlrad 26 des Planetenradsatzes 27 gebildet. Die Kopplung erfolgt durch Realisierung einer drehfesten Verbindung mittels Form- und Kraftschluß. Die drehfeste Verbindung ist hier mit 33 bezeichnet. Diese wird durch das Ineinandergreifen zueinander komplementär ausgeführter Mitnahmeelemente 18 und 19 am Hohlrad 26 und dem ersten Kegelrad 8 realisiert. Dafür wird das Kegelrad 8 mit einer entsprechenden Außenverzahnung 28 ausgeführt, die mit einer dazu komplementären Innenverzahnung 29 am Hohlrad 26 in Eingriff bringbar ist. Vorzugsweise wird dazu gleich die ohnehin am Hohlrad 26 vorgesehene Innenverzahnung 29 genutzt. Das Hohlrad ist zu diesem Zweck lediglich in axialer Richtung in Einbaulage in der Getriebebaueinheit 1 betrachtet verlängert ausgeführt, so daß neben den Planetenrädern 34 des Planetenradsatzes 27 das Hohlrad mit der Außenverzahnung 28 des Kegelrades 8 kämmt. Das Kegelrad 8 weist zu diesem Zweck in einem zweiten Teilbereich 35, welcher frei von der Kegelverzahnung ist, eine entsprechend ausgeführte Außenverzahnung 28 auf.

Dem Winkeltrieb 4 ist des weiteren der Gehäuseteil 7 zugeordnet, welcher den Winkeltrieb 4 umschließt und der in Einbaulage in Verbindung mit dem Grundgehäuse 6 eine bauliche Einheit bildet. Zur Realisierung einer vormontierbaren Baueinheit weist der Winkeltrieb 4 entsprechende Lageranordnungen 36 und zur Abstützung eine Achse 37, welche ortsfest in dem Gehäuseteil 7 angeordnet ist, auf. Der Gehäuseteil 7 kann einteilig, jedoch auch wie in der Figur 1 dargestellt mehrteilig ausgeführt sein. Die mehrteilige Ausführung wird dabei zur Vereinfachung der Montage bevorzugt.

Die Ausführung des Winkeltriebes 4 als modulare Baueinheit bietet den Vorteil, daß diese als Gesamtheit auf einfache Art und Weise in die Gesamtgetriebebaueinheit 1 integrierbar ist. Dies erfolgt durch Ineinanderschieben und damit Ineingriffbringen der Außenverzahnung 28 und der Innenverzahnung 29 des Hohlrades. Die Sicherung gegen Verschiebung in axialer Richtung erfolgt durch die Anbindung des ersten Kegelrades 8 am Gehäuseteil 7 und der zur Realisierung der Gesamtgetriebebaueinheit 1 erforderlichen Verbindung zwischen dem Gehäuseteil 7 und dem Grundgetriebegehäuse 6 der Getriebegrundeinheit 25. Zusätzliche Sicherungselemente sind nicht erforderlich.

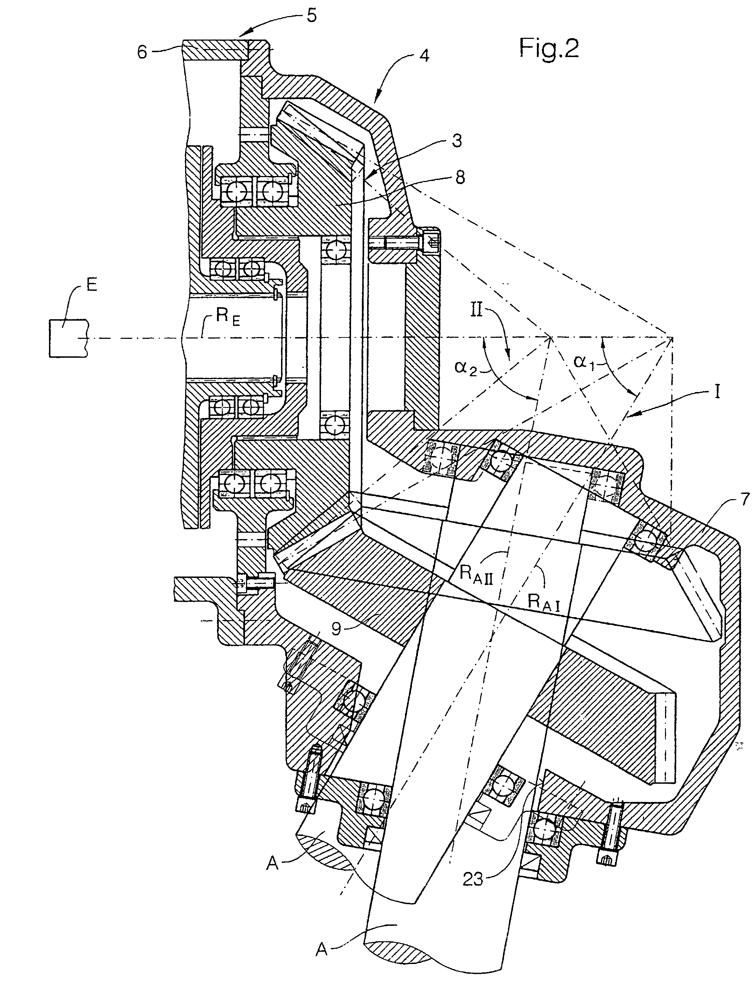

Die Figur 2 verdeutlicht in schematisch vereinfachter Darstellung die Lagerung der Getriebeausgangswelle A für zwei unterschiedliche Winkel zwischen der Getriebeeingangswelle E und der Getriebeausgangswelle A. Die mit I bezeichnete Variante entspricht dabei einem Winkel α₁ zwischen Getriebeeingangswelle E und Getriebeausgangswelle A von 60°, während die mit II bezeichnete Variante die Lagerung bezeichnet, welche für eine Anordnung der Getriebeausgangswelle A zur Getriebeeingangswelle E einem Winkel α₂ von 80° entspricht.

Der Einheitsgehäuse 7 weist des weiteren eine Durchgangsöffnung 23 auf, welche den Ausgang der Getriebeausgangswelle A ermöglicht. Vorzugsweise ist für alle Einheitsgehäuse 7 ein konstanter theoretischer Öffnungsbereich 23 vorgesehen. Die maximale Größe entspricht dabei dem von der Getriebeausgangswelle A theoretisch überstreichbarem Winkelbereich α.

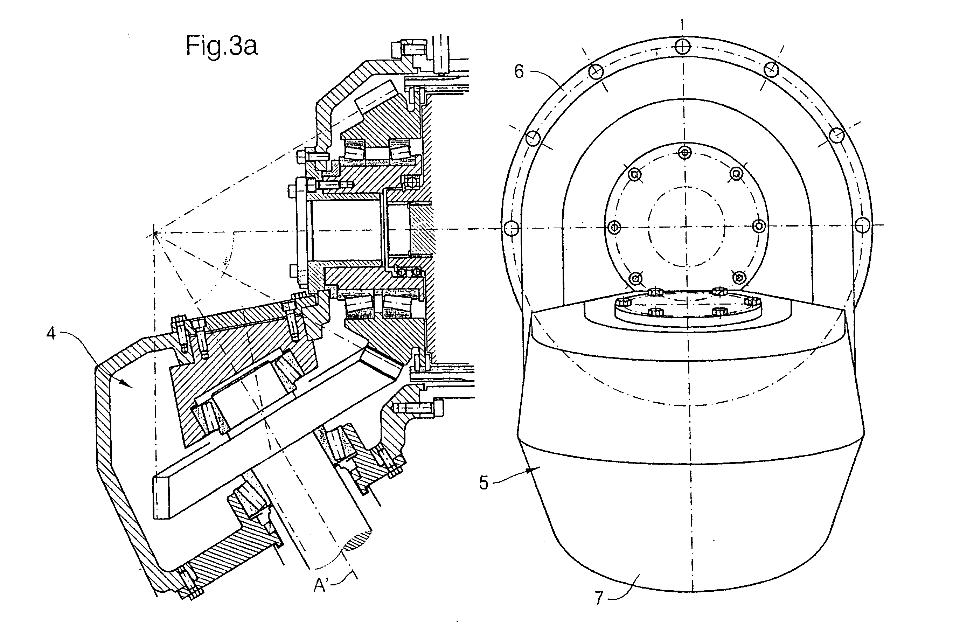

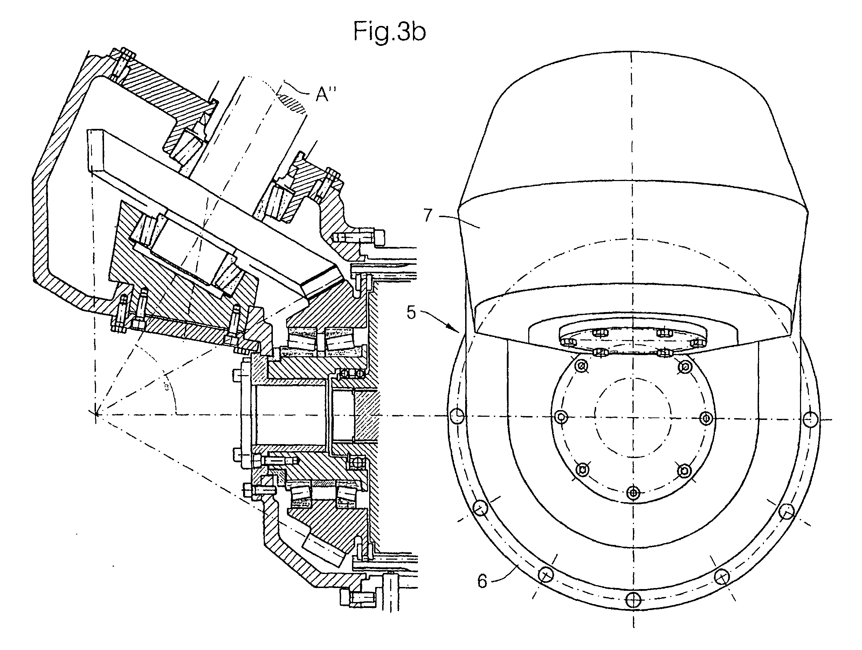

Der Einheitsgehäuse 7 ist kraft- und/oder formschlüssig mit dem Getriebegehäuse 6 verbindbar. Vorzugsweise erfolgt die Koppelung über Schraub- und/oder Steckverbindungen. Die zur Realisierung der Verbindüng erforderlichen Ausnehmungen und Durchgangsöffnungen am Getriebegrundgehäuse 6 und am Einheitsgehäuse 7 sind vorzugsweise derart ausgeführt, daß eine Drehbarkeit in Umfangsrichtung der Getriebebaueinheit 1 betrachtet möglich ist, um somit unterschiedliche Anordnungen der Kegelradstufe 3, insbesondere des zweiten Kegelrades 9 und damit des Winkeltriebes 4 bezogen auf die Einbaulage der Getriebebaueinheit und damit des Getriebegehäuses 5 gegenüber letzterem zu realisieren. Mögliche Stellungen sind als Beispiel in den Figuren 3a und 3b für eine Ansicht A entsprechend Fig. 1 oder 2 dargestellt. Diese Möglichkeit ist besonders dann von enormer Bedeutung, wenn das Getriebegehäuse 5 einen bestimmten Aufbau aufweist, welcher an eine bestimmte Einbaulage gebunden ist. Dies ist immer dann der Fall, wenn beispielsweise Rinnen oder Führungskanäle für Schmiermittel oder ähnliches vorzusehen sind. Die in der Fig. 3 bezogen auf die Einbaulage dargestellten Abtriebsmöglichkeiten sind jeweils mit A' und A" bezeichnet, wobei A' eine Ausführung mit Eignung für Linksverkehr und A" in Figur 3b eine Ausführung für Rechtsverkehr kennzeichnet.

Die in den Figuren 1 und 2 beschriebene Ausführung des Einheitsgehäuses 7 ermöglicht des weiteren eine von der konventionellen Art abweichende Ausbauweise des zweiten Kegelrades 9. Während bei konventionellen Ausführungen das zweite Kegelrad 9 in Richtung Symmetrieachse der Getriebeausgangswelle A ausgebaut wurde, besteht mit der erfindungsgemäßen Ausführung des Einheitsgehäuses 7 die Möglichkeit, den Einheitsgehäuse 7 zuerst vom übrigen Getriebegehäuse 5 zu lösen und nach Lösung der Getriebeausgangswelle A vom Kegelrad G dieses in seitlicher Richtung aus dem vom Einheitsgehäuse 7 gebildeten Innenraum 11 heraus zu rollen. Dadurch wird es möglich, die gesamte Kegelradstufe 3 in axialer Richtung weiter in das Innere des Getriebegehäuses 5 zu versetzen, da der Einheitsgehäuse 7 nicht mehr an die Größe des Bereiches der Durchgangsöffnung 23 der Getriebeausgangswelle A an eine Öffnung gebunden ist, die es auch erlaubt in dieser Richtung, das zweite Kegelrad 9 auszubauen.

Andere Möglichkeiten zur Realisierung des Ausbaus des zweiten Kegelrades 9 bedingen eine entsprechende Gestaltung der Öffnung 23. In einer alternativen, hier nicht dargestellte Ausführung für die Durchgangsöffnung der Getriebeausgangswelle A kann diese elliptisch ausgeführt werden. Die maximalste Abmessung entspricht dabei dem Außendurchmesser d_{A} des zweiten Kegelrades 9. Beim Ausbau wird auch hier zuerst die Verbindung zwischen Getriebeausgangswelle A und zweitem Kegelrad 9 gelöst und das zweite Kegelrad 9 durch Kippen der elliptischen Öffnung zugeführt.

Die Ausgestaltung des Getriebegehäuses 5 entsprechend der Figuren 1 bis 3, insbesondere des Einheitsgehäuses 7, ermöglicht die Schaffung eines Einheitsgehäuses, mittels welchem verschiedene Winkeltriebe 4 abgedeckt werden können. Lediglich die Ausgestaltung bzw. Fertigung und Bearbeitung der Innenkontur im Bereich des zweiten Kegelrades, welches mit der Getriebeausgangswelle A gekoppelt ist, legt den Abtriebswinkel fest. Durch die Aufteilung des Gehäuses in ein Getriebegrundgehäuse 6 und einen sogenannten Einheitsgehäuse 7 kann der Winkeltrieb 4 in axialer Richtung gegenüber konventionellen Ausführungen weiter in Richtung Getriebeeingangswelle verrückt werden. Die sehr kurze Bauweise erfolgt somit über die Ebene der Anflanschung des gesamten Winkeltriebes. Die beschriebene bevorzugte Ausbauweise führt zu einer freien Gestaltung der Abtriebsseite, welche in einer kurzen und materialsparenden Bauweise resultiert. Die Grundgetriebebaueinheit ist ohne Winkeltrieb 4 prüfbar.

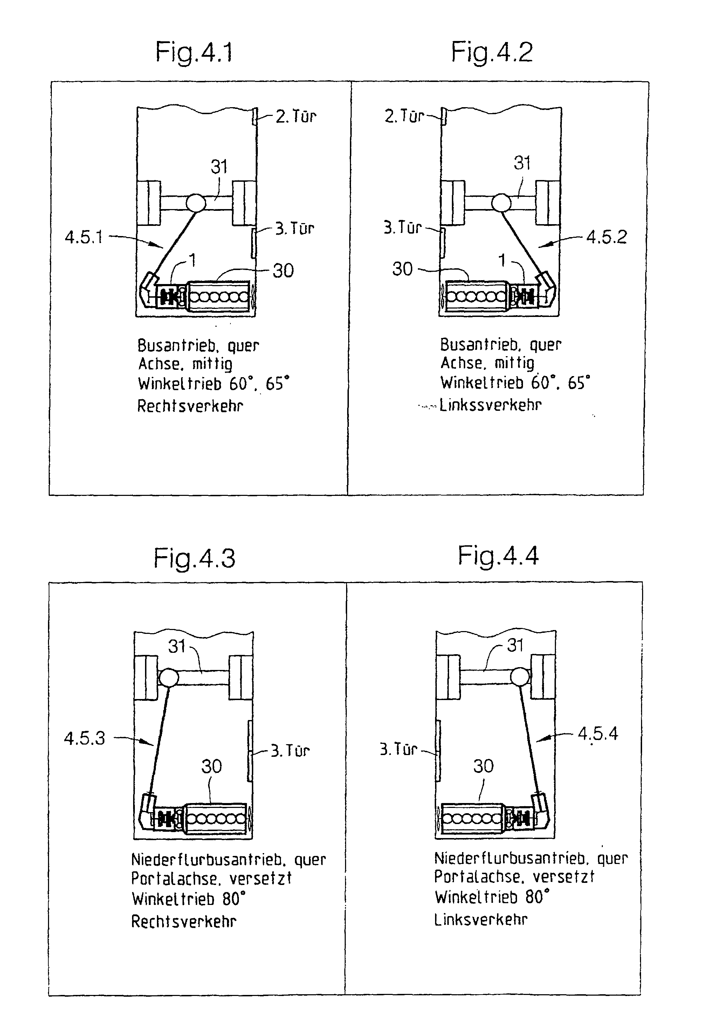

Die Fig. 4 verdeutlicht anhand von Beispielen mögliche Anwendungen einer erfindungsgemäß gestalteten Getriebebaueinheit 1 mit Einheitsgehäuse, umfassend das Getriebegrundgehäuse 6 und den Einheitsgehäuse 7. Der Begriff Einheitsgehäuse ist dabei nicht so zu verstehen, daß dieser einen vollständigen Abschluß ermöglicht, sondern dieser kann ebenfalls mit Öffnungen versehen werden, welche wiederum über deckelförmige Elemente verschließbar sind.

Die Fig. 4.1 verdeutlicht den Einsatz der erfindungsgemäßen Getriebebaueinheit 1 in einem Busantrieb mit quer eingebauter Antriebsmaschine 30 zum Antrieb einer Achse 31, welche zwischen zweiter und dritter Tür in einem Bus für den Busantrieb vorgesehen ist. Die Antriebsmaschine 30 ist mit der Getriebebaueinheit 1 zum Zwecke der Drehmomenten-/Drehzahlwandlung gekoppelt, wobei die Abtriebswelle 32 des mechanischen Getriebeteiles koaxial zur Getriebeeingangswelle E verläuft. Der Achsantrieb erfolgt hier über den Winkeltrieb 4.51 mittig auf die Achse 31. Der Winkeltrieb 4.51 nimmt dabei einen Winkel von 60 oder 65° ein. Diese Ausführung ist insbesondere für Rechtsverkehr geeignet.

Die Fig. 4.2 verdeutlicht eine Ausführung entsprechend Fig. 4.1 in schematisch vereinfachter Darstellung anhand einer Ansicht auf einen Busantrieb. Auch hier ist die Antriebsmaschine 30 quer eingebaut und der Achsantrieb erfolgt ebenfalls mittig. Die Ausführung unterscheidet sich gegenüber der in der Fig. 4.1 beschriebenen durch eine Änderung der Kraftflußrichtung zwischen Antriebsmaschine 30 und Getriebebaueinheit 1. Diese Ausführung ist insbesondere für Linksverkehr geeignet.

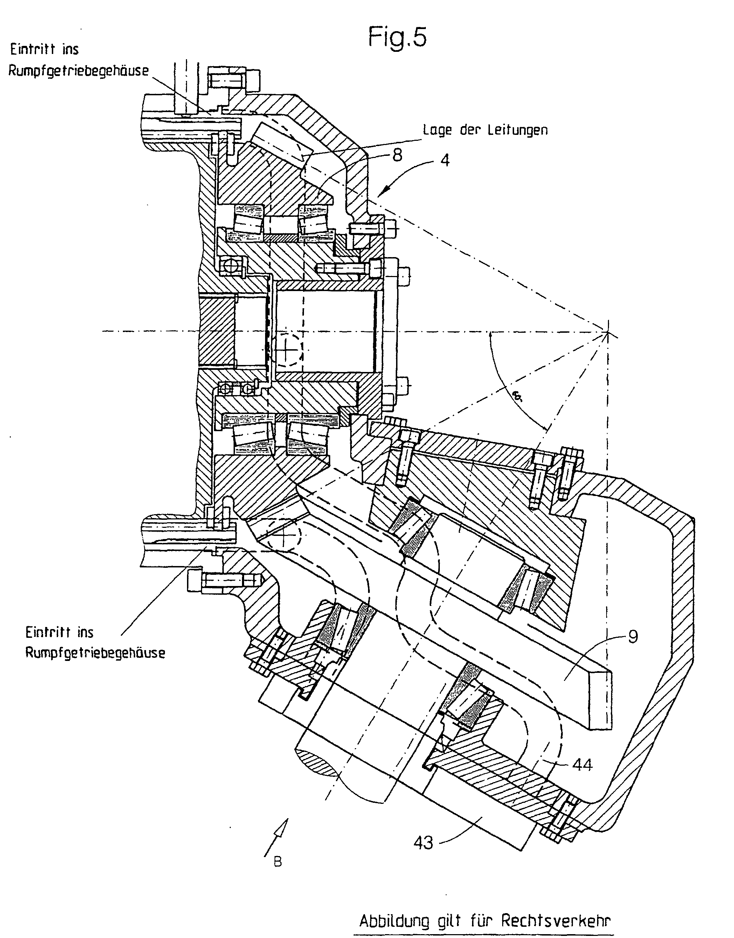

Die Figuren 4.3 und 4.4 verdeutlichen Einsatzbeispiele in sogenannten Niederflurbusantrieben, wobei die Anordnung der Antriebsmaschine 30 wiederum quer zur Fahrtrichtung erfolgt und der Antrieb der Portalachse 31 außermittig, d.h. versetzt, über einen Winkeltrieb 4.53 bzw. 4.54 erfolgt. Die Ausführung in der Fig. 5.3 ist dabei für Rechtsverkehr und die Ausführung in der Fig. 5.4 für Linksverkehr geeignet. Der Winkeltrieb, d.h. der Winkel zwischen Getriebeeingangswelle E und Getriebeausgangswelle A beträgt hier 80°.

Die Fig. 5 verdeutlicht eine bevorzugte Weiterentwicklung des Einheitsgehäuses gemäß den Figuren 1 bis 4. Bei diesen wird der Wärmetauscher 43 direkt an das Getriebegehäuse im Bereich der Getriebeausgangswelle A angeflanscht. Die bei konventionellen Ausführungen verwendeten Ölschlauchleitungen sollen entfallen, was durch eine entsprechende Ausbildung des Einheitsgehäuses 7 mit entsprechend integrierten Kühlkanälen 44, vorzugsweise direkt in die Gehäusewandung eingegossen, erzielt wird.

### Bezugszeichenliste

- E: Getriebeeingangswelle
- A: Getriebeausgangswelle
- 1: Getriebebaueinheit
- 2: mechanischer Getriebeteil
- 3: Kegelradstufe
- 4: Winkeltrieb
- 5: Getriebegehäuse
- 6: Getriebegrundgehäuse
- 7: Einheitsgehäuse
- 8: erstes Kegelrad
- 9: zweites Kegelrad
- 10: Schnittpunkt der Symmetrieachsen
- 11 1: Innenraum
- 12: Sonnenrad
- 13: Planetenräder
- 15: Abtrieb des Grundgetriebes
- 16: Außenumfang des ersten Kegelrades
- 17: Innenumfang Hohlrad
- 18: Mitnahmeelemente
- 19: Mitnahmeelemente
- 20: Lagerungsaufnahmeeinrichtungen
- 21: Innenkontur
- 22: Lagertragelement
- 23: Durchgangsöffnung
- 25: Grundgetriebebaueinheit
- 26: Hohlrad
- 27: Planetenradsatz
- 28: Außenverzahnung
- 29: Innenverzahnung
- 30: Lagertragelement
- 31: Lager
- 32: Lager
- 33: drehfeste Verbindung
- 34: Planetenräder
- 35: zweiter Teilbereich des Kegelrades
- 36: Lageranordnung
- 37: Achse
- 38: Lauffläche
- 39: Lauffläche
- 40: Außenwand
- 41, 42: Befestigungselemente
- 43: Wärmetauscher

- F₈₁, F₈₂ und F₉₁, F₉₂ -: Flankenlinien der Verzahnungen der Kegelräder

## Patentansprüche

1. Einheitsgehäuse (7) für eine Mehrzahl von Winkeltrieben (4), umfassend wenigstens eine Kegelradstufe (3) mit einem ersten Kegelrad (8) und einem zweiten Kegelrad (9), zur Realisierung unterschiedlicher Winkel zwischen einer Getriebeeingangs- und einer Getriebeausgangswelle (E,A), wobei das zweite Kegelrad (9) mit der Getriebeausgangswelie (A) wenigstens mittelbar drehfest koppelbar ist;
1.1. das Einheitsgehäuse (7) ist für eine Mehrzahl der theoretisch möglichen Winkelabtriebe (4) mit den folgenden Merkmalen:
- Übersetzung i nahezu konstant und
- Außendurchmesser der einzelnen Kegelräder (8,9) nahezu identisch
mit identischen Außenabmessungen ausgeführt;
1.2 der Getriebeausgangswelle (A) und/oder dem zweiten Kegelrad (9) sind im Einheitsgehäuse (7) Lagerungsaufnahmeeinrichtungen zugeordnet;
1.3 die Lagerungsaufnahmeeinrichtungen (20) werden von der innenkontur (21) des Einheitsgehäuses (7) und/oder austauschbaren, zur Aufnahme der Lagerungen (31, 32) der Getriebeausgangswelle (A) dimensionierten Lagertragelementen (30,22) gebildet. **gekennzeichnet durch** die folgenden Merkmale:
1.4 die Mehrzahl der theoretisch möglichen im Einheitsgehäuse (7) lagerbaren winkeltriebe (4) ist **durch** zwei Grenzpositionen der Schnittpunkte der Flankenlinien (F₈₁, F_{82,} F₉₁, F₉₂) der Kegelräder beschreibbar;
1.5 eine erste Grenzposition für den Winkeltrieb mit dem größten theoretisch möglichen Winkel zwischen Getriebeeingangs- (E) und Getriebeausgangswelle (A) ist **durch** den am nächsten am Gehäuse (7) liegenden Schnittpunkt und eine zweite Grenzposition für den Winkeltrieb (4) mit dem kleinsten theoretisch möglichen Winkel zwischen Getriebeeingangs- (E) und Getriebeausgangswelle (A) **durch** den am weitesten vom Gehäuse entfernten Schnittpunkt der Flankenlinien(F₈₁, F₈₂, F₉₁, F₉₂) charakterisiert.

2. Einheitsgehäuse (7) nach Anspruch 1, **dadurch gekennzeichnet, daß** die Grenzpositionen einen Winkeltriebbereich zwischen 90 und <180° beschreiben.

3. Einheitsgehäuse (7) nach einem der Ansprüche 1 oder 2, **dadurch gekennzeichnet, daß** die Innenkontur für jeden theoretisch möglichen Winkel zwischen Getriebeeingangswelle (E) und Getriebeausgangswelle (A) durch eine entsprechende spanende Bearbeitung der Gehäuseinnenwand erzeugbar ist

4. Einheitsgehäuse (7) nach einem der Ansprüche 1 oder 2, **gekennzeichnet durch** die folgenden Merkmale:
4.1 die Lagerungsaufnahmeeinrichtung (20) der Getriebeausgangswelle (A) weist zwei Lagertragelemente (30, 22), die der Getriebeausgangswelle (A) zugeordnet sind, zur Aufnahme wenigstens jeweils eines Lagers auf (31, 32) - ein erstes Lagertragelement (22) und ein zweites Lagertragelement (30) -;
4.2 die Lagertragelemente (22, 30) bilden jeweils eine Lauffläche (38, 39) der einzelnen Lager (31, 32).

5. Einheitsgehäuse (7) nach Anspruch 4, **gekennzeichnet durch** die folgenden Merkmale:
5.1 ein erstes Lagertragelement (22) dient der Lagerung des Endbereiches der Getriebeausgangswelle (A) im Gehäuse (7);
5.2 ein zweites Lagertragelement (30) dient der Lagerung der Getriebeausgangswelle (A) im Bereich des Austritts aus dem Gehäuse (7).

6. Einheitsgehäuse (7) nach einem der Ansprüche 4 oder 5, **dadurch gekennzeichnet, daß** wenigstens eines der Lagertragelemente (22, 30) - erstes und/oder zweites Lagertragelement einen Teil der Außenwand (40) des Gehäuses (7) bildet.

7. Einheitsgehäuse (7) nach einem der Ansprüche 5 oder 6, **dadurch gekennzeichnet, daß** das zweite Lagertragelement (22, 30) Anschlüsse und/oder Durchführungen für Betriebsmitteileitungen und/oder Durchführungen für elektrische Leitungen aufweist.

8. Einheitsgehäuse (7) nach einem der Ansprüche 5 bis 7, **dadurch gekennzeichnet, daß** am zweiten Tragelement (30) ein Wärmetauscher (43) angeordnet ist.

9. Einheitsgehäuse (7) nach einem der Ansprüche 4 bis 8, **dadurch gekennzeichnet, daß** die Tragelemente (22,30) mittels Befestigungselementen (41,42) an der Gehäuseinnenwandung befestigbar sind.

10. Gehäuse (5) für eine Getriebebaueinheit (1), umfassend eine Grundgetriebeeinheit (25) und einen Winkeltrieb mit einem der Grundgetriebebaueinheit zugeordneten Grundgetriebegehäuse (6) und einem, dem Winkeltrieb zugeordneten Einheitsgehäuse (7) nach einem der Ansprüche 1 bis 9.

11. Gehäuse (5) nach Anspruch 10, **gekennzeichnet durch** die folgenden Merkmale:
11.1 im Grundgetriebegehäuse (6) sind eine Mehrzahl von Kanälen zur Betriebs-und/oder Schmiermittel- und/oder Kühimittelführung angeordnet;
11.2 der Mehrzahl von Kanälen zur Betriebs-und/oder Schmiermittelund/oder Kühlmittelführung sind entsprechend komplementäre Anschlußkanäle im Einheitsgehäuse (7) zugeordnet, welche beim Zusammenschluß von Getriebegrundgehäuse (6) und Einheitsgehäuse (7) **durch** die Getriebebaueinheit (1) erstreckende Kanäle zur Betriebs-und/oder Schmiermittel- und/oder Kühlmittelführung bilden.

12. Getriebebaueinheit (1)
12.1 mit einer Getriebeeingangswelle (E) und einer Getriebeausgangswelle (A);
12.2 mit einem zwischen Getriebeeingangswelle (E) und Getriebeausgangswelle (A) angeordneten Grundgetriebe (25) und einen Winkeltrieb (4), welcher mit dem Abtrieb des Grundgetriebes (25) wenigstens mittelbar drehfest verbunden ist;
12.3 der Winkeltrieb umfaßt wenigstens eine Kegelradstufe (3) mit einem ersten Kegelrad (8) und einem zweiten Kegelrad (9), wobei das zweite Kegelrad (9) mit der Getriebeausgangswelle (A) wenigstens mittelbar drehfest koppelbar ist;
12.4 mit einem Gehäuse (5) gemäß einem der Ansprüche 9 - 11.

13. Getriebebaueinheit (1) nach Anspruch 12, **dadurch gekennzeichnet, daß** das erste Kegelrad (8) des Winkeltriebes (14) und ein den Abtrieb der Grundgetriebebaueinheit (25) bildendes Getriebeelement der Grundgetriebebaueinheit (25) unmittelbar miteinander drehfest verbunden und räumlich nahe beieinander angeordnet sind.

14. Getriebebaueinheit (1) nach Anspruch 13, **gekennzeichnet durch** die folgenden Merkmale:
14.1 die Grundgetriebebaueinheit (25) umfaßt wenigstens einen Planetenradsatz (27)mit wenigstens einem Hohlrad(26), einem Sonnenrad (12), Planetenrädern (13) und einem Steg (14) oder einen Stirnradsatz;
14.2 der Abtrieb der Grundgeiriebebaueinheit (25) wird von einem Element des Planetenradsatzes (27) oder des Stimradsatzes gebildet.

15. Getriebebaueinheit (1) nach Anspruch 14, **dadurch gekennzeichnet, daß** das erste Kegelrad (8) der Kegelradstufe (3) drehfest mit dem Hohlrad (26) der Planetenradstufe (27) koppelbar ist.

16. Getriebebaueinheit (1) nach einem der Ansprüche 14 oder 15, **dadurch gekennzeichnet, daß** die Kopplung durch Kraft- und/oder Formschfuß erfolgt.

17. Getriebebaueinheit (1) nach Anspruch 14 oder 15, **dadurch gekennzeichnet, daß** die drehfeste Kopplung durch integrale Bauweise von ersten Kegelrad (8) und Abtriebswelle des mechanischen Getriebeteils oder ersten Kegelrad (8) und Getriebeelement des mechanischen Getriebeteils realisiert wird.

18. Getriebebaueinheit (1)nach einem der Ansprüche 12 bis 17, **dadurch gekennzeichnet, daß** die Verzahnung der miteinander kämmenden Kegelräder (8,9) als Geradverzahnung ausgeführt ist.

19. Getriebebaueinheit (1)nach einem der Ansprüche 12 bis 17, **dadurch gekennzeichnet, daß** die Verzahnung der miteinander kämmenden Kegelräder (8, 9) der Kegelradstufe (3) als Schrägverzahnung ausgeführt ist.

20. Getriebebaueinheit (1) nach einem der Ansprüche 18 oder 19, **dadurch gekennzeichnet, daß** die Kegelräder (8, 9) der Kegelradstufe (3) Verzahnungsetemente mit konstanter Zahnhöhe aufweisen.

## Claims

1. Standard casing (7) for a plurality of angular drives (4), comprising at least one bevel gear stage (3) with a first bevel gear (8) and a second bevel gear (9), for realising different angles between a gearbox input shaft and a gearbox output shaft (E,A), the second bevel gear (9) being capable of coupling with torsional strength at least indirectly with the gearbox output shaft (A) ;
1.1 the standard casing (7) is provided for a plurality of theoretically possible angular drives (4) with the following features:
- almost constant transmission i and
- almost identical external diameters of individual bevel gears (8,9) with identical external dimensions;
1.2 mounting reception devices in the standard casing (7) are associated with the gearbox output shaft (A) and/or the second bevel gear (9);
1.3 the mounting reception devices (20) are formed by the internal contour (21) of the standard casing (7) and/or interchangeable bearing support elements (30,22) dimensioned to receive the mountings (31,32) of the gearbox output shaft (A),
**characterised by** the following features:
1.4 the plurality of theoretically possible angular drives (4) that can be supported in the standard casing (7) can be described by means of two limit positions of the points of intersection of the tooth traces (F₈₁, F₈₂, F₉₁, F₉₂) of the bevel gears;
1.5 a first limit position for the angular drive with the largest theoretically possible angle between gearbox input shaft (E) and gearbox output shaft (A) is **characterised by** means of the point of intersection lying closest to the casing (7) and a second limit position for the angular drive (4) with the smallest theoretically possible angle between gearbox input shaft (E) and gearbox output shaft (A) by means of the point of intersection of the tooth traces (F₈₁, F₈₂, F₉₁, F₉₂) furthest remote from the casing.

2. Standard casing (7) according to claim 1, **characterised in that** the limit positions describe an angular drive range between 90 and 180 degrees.

3. Standard casing (7) according to any one of claims 1 or 2, **characterised in that** the internal contour for each theoretically possible angle between gearbox input shaft (E) and gearbox output shaft (A) is capable of being created by means of a corresponding machining of the internal wall of the casing.

4. Standard casing (7) according to any one of claims 1 or 2, **characterised by** the following features:
4.1 the mounting reception device (20) of the gearbox output shaft (A) has two bearing support elements (30,22) associated with the gearbox output shaft (A), for receiving at least respectively one bearing (31,32) being a first bearing support element (22) and a second bearing support element (30) ;
4.2 the bearing support elements (22,30) form respectively one bearing surface (38,39) of the individual bearings (31,32).

5. Standard casing (7) according to claim 4, **characterised by** the following features:
5.1 a first bearing support element (22) serves for supporting the end region of the gearbox output shaft (A) in the casing (7);
5.2 a second bearing support element (30) serves for supporting the gearbox output shaft (A) in the region of the exit from the casing (7).

6. Standard casing (7) according to any one of claims 4 or 5, **characterised in that** at least one of the bearing support elements (22,30) - first and/or second bearing support element - forms a portion of the external wall (40) of the casing (7).

7. Standard casing (7) according to any one of claims 5 or 6, **characterised in that** the second bearing support element (22,30) has connections and/or ducts for lines for operating means and/or ducts for electrical lines.

8. Standard casing (7) according to any one of claims 5 to 7, **characterised in that** a heat exchanger (43) is arranged on the second support element (30).

9. Standard casing (7) according to any one of claims 4 to 8, **characterised in that** the support elements (22,30) are fixable to the internal wall of the casing by means of fixing elements (41,42).

10. Housing (5) for a gearbox assembly (1), comprising a basic gearbox assembly (25) and an angular drive with one basic gearbox casing (6) associated with the basic gearbox assembly and one standard casing (7) associated with the angular drive according to any one of the claims 1 to 9.

11. Housing (5) according to claim 10, **characterised by** the following features:
11.1 in the basic gearbox casing (6) there is a plurality of channels for carrying operating means and/or lubricant and/or coolant;
11.2 complementary connecting channels in the standard casing (7) are associated with the plurality of channels for carrying operating means and/or lubricant and/or coolant, which connecting channels form channels for carrying operating means and/or lubricant and/or coolant extending through the gearbox assembly (1) when connecting gearbox basic casing (6) and standard casing (7).

12. Gearbox assembly (1)
12.1 with one gearbox input shaft (E) and one gearbox output shaft (A) ;
12.2 with one basic gearbox (25) arranged between gearbox input shaft (E) and gearbox output shaft (A) and one angular drive (4), which is connected with torsional strength at least indirectly to the output of the basic gearbox (25);
12.3 the angular drive comprises at least one bevel gear stage (3) with a first bevel gear (8) and a second bevel gear (9) wherein the second bevel gear (9) is capable of coupling at least indirectly with torsional strength to the gearbox output shaft (A);
12.4 with a casing (5) according to any one of claims 9 to 11.

13. Gearbox assembly (1) according to claim 12, **characterised in that** the first bevel gear (8) of the angular drive (14) and one gearbox element of the basic gearbox assembly (25) forming the output of the basic gearbox assembly (25) are directly mutually connected with torsional strength and are arranged in close proximity to one another.

14. Gearbox assembly (1) according to claim 13, **characterised by** the following features:
14.1 the basic gearbox assembly (25) comprises at least one planetary gear set (27) with at least one ring gear (26), one sun gear (12), planetary gears (13) and one web (14) or a spur gear set;
14.2 the output of the basic gearbox assembly (25) is formed from an element of the planetary gear set (27) or of the spur gear set.

15. Gearbox assembly (1) according to claim 14, **characterised in that** the first bevel gear (8) of the bevel gear stage (3) is capable of coupling with torsional strength to the ring gear (26) of the planetary gear stage (27).

16. Gearbox assembly (1) according to any one of claims 14 or 15, **characterised by** the fact that the coupling occurs by means of non-positive or interlocking connection.

17. Gearbox assembly (1) according to any one of claims 14 or 15, **characterised by** the fact that the torsionally strong coupling is realised by means of the integral design of the first bevel gear (8) and output shaft of the mechanical gearbox portion or the first bevel gear (8) and gearbox element of the mechanical gearbox portion.

18. Gearbox assembly (1) according to any one of claims 12 to 17, **characterised by** the fact that the teeth of the meshing bevel gears (8,9) are designed as spur toothing.

19. Gearbox assembly (1) according to any one of claims 12 to 17, **characterised by** the fact that the teeth of the meshing bevel gears (8,9) of the bevel gear stage (3) are designed as helical teeth.

20. Gearbox assembly (1) according to any one of claims 18 or 19, **characterised in that** the bevel gears (8,9) of the bevel gear stage (3) have teeth elements of constant tooth height.

## Revendications

1. Carter unitaire (7) pour une pluralité de renvois angulaires (4), comprenant au moins un étage de roues coniques (3) avec une première roue conique (8) et une deuxième roue conique (9), destiné à réaliser différents angles entre un arbre d'entrée et un arbre de sortie d'une transmission (E, A), la deuxième roue conique (9) pouvant être couplée solidaire en rotation au moins indirectement avec l'arbre d'entrée (A) de la transmission;
1.1 le carter unitaire (7) est réalisé pour une pluralité des renvois angulaires (4) théoriquement possibles avec les particularités suivantes :
- démultiplication i quasiment constante et
- diamètre extérieur des différentes roues coniques (8,9) quasiment identique
avec des dimensions extérieures identiques ;
1.2 des dispositifs de réception de logements de paliers sont associés à l'arbre de sortie (A) de la transmission et/ou à la deuxième roue conique (9);
1.3 les dispositifs de réception de logements de paliers (20) sont formés par le contour intérieur (21) du carter unitaire (7) et/ou par des éléments porteurs de paliers (30, 22) échangeables, dimensionnés pour la réception de logements des paliers (31, 32) de l'arbre de sortie (A) de la transmission
**caractérisé par** les particularités suivantes :
1.4 la pluralité des renvois angulaires (4) théoriquement possibles logeables dans le carter unitaire (7) peuvent être décrits par deux positions limites des points d'intersection des lignes de flanc (F₈₁, F₈₂, F₉₁, F₉₂) des roues coniques ;
1.5. une première position limite pour le renvoi angulaire avec l'angle théoriquement le plus grand possible entre l'arbre d'entrée (E) et l'arbre de sortie (A) de la transmission est **caractérisée par** le point d'intersection le plus proche du carter (7) et une deuxième position limite pour le renvoi angulaire (4) avec l'angle théoriquement le plus petit possible entre l'arbre d'entrée (E) et l'arbre de sortie (A) de la transmission par le point d'intersection des lignes de flanc (F₈₁, F₈₂, F_{91,} F₉₂) le plus éloigné du carter.

2. Carter unitaire (7) selon la revendication 1, **caractérisé en ce que** les positions limites décrivent un domaine de renvoi angulaire situé dans la plage de 90 à moins de 180°.

3. Carter unitaire (7) selon l'une des revendications 1 ou 2, **caractérisé en ce que** le contour intérieur pour chaque angle théoriquement possible entre l'arbre d'entrée (E) et l'arbre de sortie (A) de la transmission peut être obtenu par un usinage approprié par enlèvement de copeaux de la paroi intérieure du carter.

4. Carter unitaire (7) selon l'une des revendications 1 ou 2, **caractérisé par** les particularités suivantes :
4.1 le dispositif de réception de paliers (20) de l'arbre de sortie (A) de la transmission présente deux éléments porteurs de paliers (30, 22) qui sont associés à l'arbre de sortie (A) de la transmission respectivement pour la réception d'au moins un palier (31, 32) - un premier élément porteur de palier (22) et un deuxième élément porteur de palier (30) - ;
4.2 les éléments porteurs de paliers (22,30) forment respectivement une surface de roulement (38,39) des différents paliers (31, 32).

5. Carter unitaire (7) selon la revendication 4, **caractérisé par** les particularités suivantes :
5.1 un premier élément porteur de paliers (22) sert à loger dans le carter (7) la zone d'extrémité de l'arbre de sortie (A) de la transmission ;
5.2 un deuxième élément porteur de paliers (30) sert à loger en dehors du carter (7) l'arbre de sortie (A) de la transmission, dans sa zone de sortie.

6. Carter unitaire (7) selon l'une des revendications 4 ou 5, **caractérisé en ce que**, au moins un des éléments porteurs de paliers (22, 30) - le premier et/ou le deuxième élément porteur de paliers - forme une partie de la paroi extérieure (40) du carter (7) .

7. Carter unitaire (7) selon l'une des revendications 5 ou 6, **caractérisé en ce que** le deuxième élément porteur de paliers (22,30) présente des espaces et/ou des passages pour des conduites de fluide de fonctionnement et/ou des passages pour des lignes électriques.

8. Carter unitaire (7) selon l'une des revendications 5 à 7, **caractérisé en ce qu'**un échangeur de chaleur (43) est agencé sur le deuxième élément porteur (30).

9. Carter unitaire (7) selon l'une des revendications 4 à 8, **caractérisé en ce que** les éléments porteurs (22, 30) peuvent être fixés à l'aide d'éléments de fixation (41, 42) à la paroi intérieure du carter.

10. Carter (5) pour une unité de transmission (1), comportant une unité de transmission de départ (25) et un renvoi angulaire avec un carter de transmission de départ (6) affecté à l'unité de transmission de départ et avec un carter unitaire (7) affecté au renvoi angulaire selon l'une des revendications 1 à 9.

11. Carter (5) selon la revendication 10, **caractérisé par** les particularités suivantes :
11.1 dans le carter de transmission de départ (6) sont agencés une pluralité de canaux pour l'amenée de fluide de fonctionnement et/ou de lubrifiant et/ou d'agent réfrigérant ;
11.2 à la pluralité de canaux pour l'amenée de fluide de fonctionnement et/ou- de lubrifiant et/ou d'agent réfrigérant sont affectés de manière correspondante des canaux de raccordement complémentaires dans le carter unitaire (7), lesquels forment lors de la réunion du carter de la transmission de départ (6) et du carter unitaire (7), des canaux qui s'étendent à travers l'unité de transmission (1) pour l'amenée de fluide de fonctionnement et/ou de lubrifiant et/ou d'agent réfrigérant.

12. Unité de transmission (1)
12.1 avec un arbre d'entrée (E) et un arbre de sortie (A) de transmission;
12.2 comportant, agencés entre l'arbre d'entrée (E) et l'arbre de sortie (A) de la transmission, une transmission de départ (25) et un renvoi angulaire (4) qui est relié au moins indirectement solidaire en rotation avec l'organe de sortie de la transmission de départ (25) ;
12.3 le renvoi angulaire comprend au moins un étage de roues coniques (3) avec une première roue conique (8) et une deuxième roue conique (9), la deuxième roue conique (9) pouvant être couplée solidaire en rotation au moins indirectement avec l'arbre de sortie (A) de la transmission;
12.4 avec un carter (5) selon l'une des revendications 9 à 11.

13. Unité de transmission (1) selon la revendication 12, **caractérisée en ce que** la première roue conique (8) du renvoi angulaire (14) et un élément de transmission formant l'organe de sortie de l'unité de transmission de départ (25) sont reliés ensemble au moins indirectement solidaires en rotation avec l'unité de transmission (25) et sont agencés spatialement à proximité l'un de l'autre.

14. Unité de transmission (1) selon la revendication 13, **caractérisée par** les particularités suivantes :
14.1 l'unité de transmission de départ (25) comprend au moins un jeu de roues planétaires (27) avec au moins une couronne de train planétaire (26), une roue solaire (12), des roues planétaires (13) et un porte-satellites (14) ou un jeu de pignons droits ;
14.2 l'organe de sortie de l'unité de transmission de départ (25) est formé par un élément du jeu de roues planétaires (27) ou du jeu de pignons droits.

15. Unité de transmission (1) selon la revendication 14, **caractérisée en ce que** la première roue conique (8) de l'étage de roues coniques (3) peut être couplée solidaire en rotation avec la couronne de train planétaire (26) de l'étage de roues planétaires (27).

16. Unité de transmission (1) selon l'une des revendications 14 ou 15, **caractérisée en ce que** le couplage est réalisé par adhérence et/ou mécaniquement.

17. Unité de transmission (1) selon la revendication 14 ou 15, **caractérisée en ce que** le couplage solidaire en rotation est réalisé par une structure intégrant la première roue conique (8) et l'arbre de sortie de la partie mécanique de la transmission ou la première roue conique (8) et l'élément de transmission de la partie mécanique de la transmission.

18. Unité de transmission (1) selon l'une des revendications 12 à 17, **caractérisée en ce que** la denture des roues coniques (8,9) qui engrènent ensemble est conçue comme une denture droite.

19. Unité de transmission (1) selon l'une des revendications 12 à 17, **caractérisée en ce que** la denture des roues coniques (8,9) de l'étage de roues coniques (3) qui engrènent ensemble est conçue comme un engrenage hélicoïdal.

20. Unité de transmission (1) selon l'une des revendications 18 ou 19, **caractérisée en ce que** les roues coniques (8,9) de l'étage de roues coniques (3) présentent des éléments de denture ayant une hauteur de dents constante.
